# EUROPEAN PATENT SPECIFICATION

(11) **EP 1 232 931 B1**
(45) Date of publication and mention of the grant of the patent: **09.06.2004**
(21) Application number: 02003220.7
(22) Date of filing: 19.02.2002
(51) Int. Cl.: B62D 25/08, B62D 29/04, B60K 11/04

(54) **Automotive front body structure**
Vordere Fahrzeug-Endstruktur
Face avant pour véhicule automobile

(30) Priority: 19.02.2001 JP 2001041259
(43) Date of publication of application: 21.08.2002
(73) Proprietor: Mazda Motor Corporation, Aki-gun, Hiroshima 730-8670 (JP)
(72) Inventor: Ogawa, Masanori, Aki-gun, Hiroshima 730-8670 (JP); Kageyama, Yasunori, Aki-gun, Hiroshima 730-8670 (JP)
(74) Representative: Müller-Boré & Partner Patentanwälte

(56) References cited:
- EP-A- 1 188 645
- DE-A- 10 051 567
- US-A1- 2001 027 883

## Description

The present invention relates an automotive front body structure provided with a shroud having holding portions for holding vehicle parts.

Conventionally, this kind of an automotive front body structure is well known, in which holding portions for holding vehicle parts, such as a radiator or a condenser are provided on a shroud, so that the vehicle parts are fixed to the holding portions to build a pre-assembled shroud unit, then the pre-assembled shroud is mounted to the vehicle body parts, or front side frames, etc. as described in publication of Japanese patent application no. H03-208778. This facilitates assembling works, and reduces the number of stations throughout the assemble line.

In the front body structure provided with a shroud having holding portions as mentioned above, however, when rearward impacts act on a bumper reinforcement or other parts to damage the shroud, the parts held in the holding portions may be possibly damaged as well during automotive frontal collision, which requires improvements.

EP-A-1188645 discloses an automotive front body structure comprising a shroud to which a holding portion for holding one or more vehicle parts is attached. In case of a frontal collision, the holding portion is moved backwards by the automotive front body structure. During this movement the holding portion can be separated from the shroud.

DE 100 51 567 A1 describes an automotive front body structure comprising a shroud to which one or more vehicle parts is attached. In case of a frontal impact, said vehicle parts can be tilted horizontally around a point of pivotal movement or said parts can be elastically moved backwards, away from the impact. During either movement, the vehicle parts cannot be totally disconnected from the shroud.

In view of the above, an object of the present invention is to enhance repairability of an automotive front body structure provided with a shroud having holding portions for holding vehicle parts.

This object is solved according to the invention by an automotive front body structure according to claim 1. Preferred embodiments are subject of the dependent claims.

Accordingly, the repairability of an automotive front body structure provided with a shroud having holding portions for holding vehicle parts is improved by elaborating the structure to prevent the vehicle parts held in the holding portions from being damaged as possible in case of breakage to the shroud during automotive frontal collision.

According to the present invention, there is provided an automotive front body structure, comprising a shroud including a holding portion for holding one or more vehicle parts, and body mounted portions via which the shroud is mountable to a front section of the body, wherein said automotive front body structure includes a rearward moving means for causing said holding portion to move rearwardly relative to the front section of the body in case of a frontal collision of the automobile, whereby said automotive front body structure further includes impact absorbing members located before shroud and the vehicle parts, whereby said impact absorbing members are crushed on impact and said holding portion, when moving rearwardly, is supported by a bumper face.

Particularly, according to the preferred embodiment, there is provided an automotive front body structure, wherein the rearward moving means includes a separating portion, which is formed between the holding portion and said body mounted portions and at which the holding portion and said body mounted portions are separated in frontal collision of the automobile.

Accordingly, the holding portion and the body mounted portions are separated in case of a frontal collision of the automobile, so that the holding portion moves rearwardly possibly without receiving high impact even if the body mounted portions hardly moves rearwardly with being fixed to the body. Therefore, vehicle parts held in the holding portion are more likely to be prevented from damage with improving in repairability.

Preferably, said rearward moving means includes a projection forwardly projecting and formed on the holding portion in the vicinity of the body mounted portions, and the automotive front body structure includes a forward member located ahead of said projection,
wherein said holding portion and said body mounted portions are preferably separated when load larger than a specified (predetermined or predeterminable) amount acts rearwardly on said projection by rearward movement of said forward member as a result of frontal collision of the automobile.

Most preferably, said forward member is a bumper reinforcement extending substantially laterally.

Additionally, according to a further preferred embodiment, the rearward moving means includes a deflectable means which connects said body mounted portions with the front section of the body and is deflected or deformed or bent so as to allow the holding portion to move rearwardly relative to the front section of the body in case of a frontal collision of the automobile.

Accordingly, when load larger than a specified (predetermined or predeterminable) amount acts rearwardly on the holding portion by rearward movement of the forward member during the automotive frontal collision, the deflectable means allows the shroud to move rearwardly relative to the front section of the body preferably substantially without damage to the shroud nor vehicle parts held in its holding portion. Therefore, repairability is further improved.

Preferably, the front section of the body includes front side frames, the automotive front body structure includes a bumper reinforcement having a flange via which said bumper reinforcement is mounted to the front side flames of the body, said deflectable means comprises an extension of the flange extending laterally from the flange to said body mounted portions, and said rearward moving means includes a projection projecting forwardly and formed on a front surface of the shroud,
wherein said extension preferably deflects so that said holding portion moves rearwardly relative to the front side flames of the body when load larger than a specified (predetermined or predeterminable) amount acts rearwardly on said projection by rearward movement of said bumper reinforcement as a result of the automotive frontal collision.

Further preferably, said holding portion of the shroud comprises a substantially rectangular radiator holding portion comprising an upper wall and/or a lower wall substantially facing each other in vertical direction and substantially extending laterally and preferably left and right side walls each connecting left outer ends or end portions and right outer ends of said upper wall and said lower wall.

Accordingly, the structure is increased in stiffness or rigidity.

Still further preferably, said projections are formed on said left wall and right wall of the radiator holding portion.

Further preferably, the automotive front body structure further comprises one or more braces provided on said holding portion, preferably said radiator holding portion which connect said projections and at least one of the upper wall and the lower wall.

Most preferably, the shroud is made of resin.

These and other objects, features, aspects, and advantages of the present invention will become more apparent from the following detailed description of the preferred embodiments relative to the accompanied drawings. It should be understood that even though embodiments are separately described, single features thereof may be combined to additional embodiments.
FIG. 1 is an exploded view of a nose unit in an automobile adopting a front body structure according to a first preferred embodiment of the invention.
FIG.2 is a cross-sectional view taken along a line II - II in FIG. 1.
FIG. 3 is a cross-sectional view taken along a line III - III in FIG. 2.
FIG. 4 is a view corresponding to FIG. 1, showing a second preferred embodiment.
FIG. 5 is a cross-sectional view taken along a line V - V in FIG. 4.
FIG. 6 is a cross-sectional view taken along a line VI - VI in FIG. 5.

### (First Embodiment)

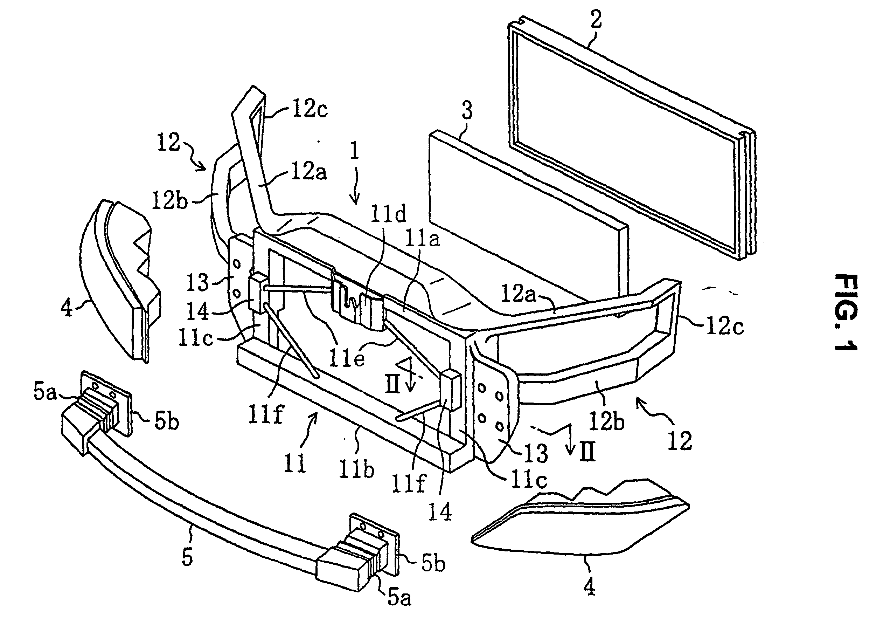

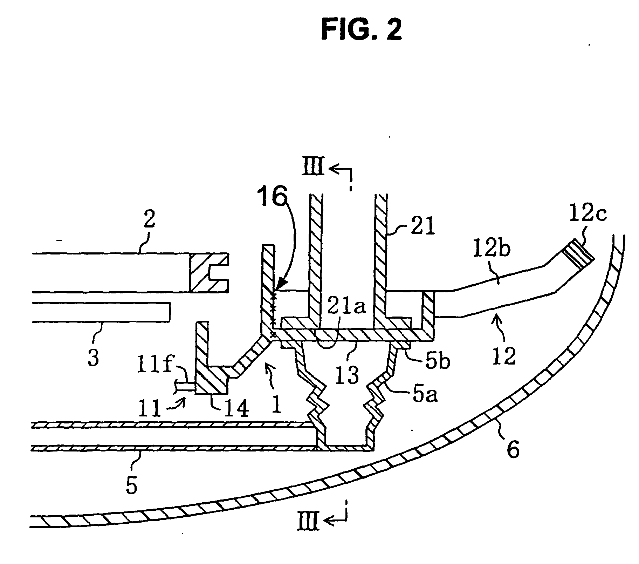

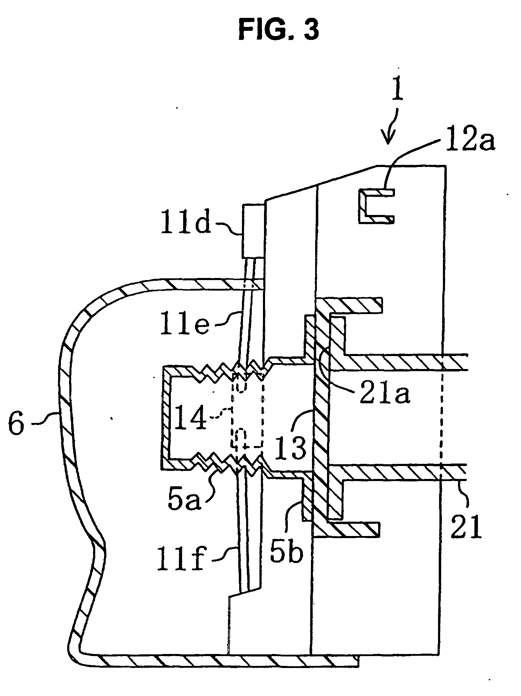

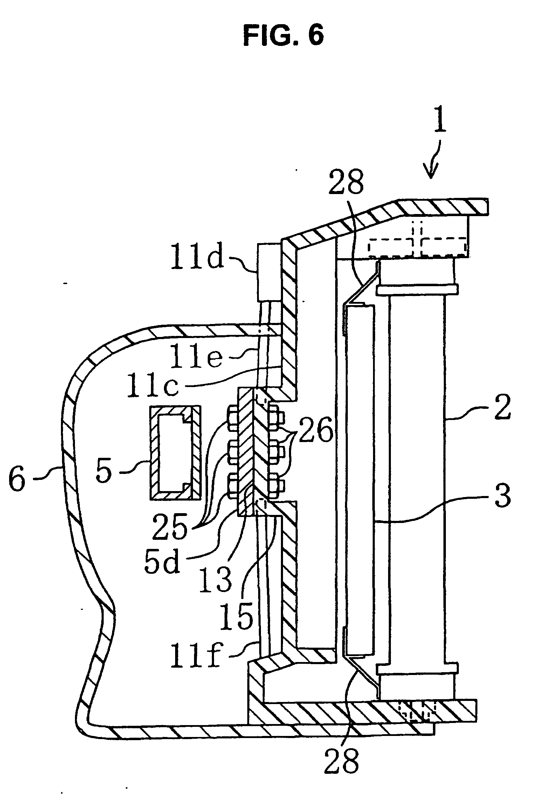

A first preferred embodiment of the invention is described hereinafter with reference to FIGS. 1 to 3. FIG. 1 is an exploded view of a nose unit in an automobile adopting a front body structure according to the first preferred embodiment of the present invention. This nose unit essentially comprises a shroud (or front support unit or louver or air baffle plate unit) 1, a radiator 2, a condenser 3 attached to the radiator 2 via an attachment bracket 28 (refer to FIG. 6 showing embodiment 2 described later), left and right head lamps 4, 4, a bumper reinforcement 5 extending laterally, a bumper face 6 not shown in FIG. 1 (refer to FIG. 2 and FIG. 3), and a radiator fan (not shown) supported on the rear side of the radiator 2.

The shroud 1, preferably made of resin such as polypropylene or other materials, is formed with a radiator holding portion 11 for holding the radiator 2 (and condenser 3) and left and right lamp holding portions 12, 12 for holding the left and right lead lamps 4, 4. The left and right lamp holding portions 12, 12 are formed on the laterally opposite ends of the radiator holding portion 11 respectively.

The radiator holding portion 11 comprises an upper wall 11a and a lower wall 11b facing each other and extending laterally, a left wall 11c connecting left ends or end portions of both the upper wall 11a and the lower wall 11b, and a right wall 11c connecting right ends or end portions of both the upper wall 11 a and the lower wall 11b, whereby preferably forming a substantially rectangular frame substantially fitting or mating with or corresponding to the contour of the radiator 2.

The left lamp holding portion 12 comprises an upper wall 12a and a lower wall 12b facing each other and extending laterally and outwardly from the left wall 11c of the radiator holding portion 11, and a side wall 12c connecting outer ends or end portions of the upper wall 12a and the lower wall 12b. Likewise, the right lamp holding portion 12 comprises an upper wall 12a and a lower wall 12b facing each other and extending laterally and outwardly from the right wall 11c of the radiator holding portion 11, and a side wall 12c connecting outer ends or end portions of the upper wall 12a and the lower wall 12b.

As shown in FIG.2 and FIG. 3, the shroud 1 is provided with left and right body mounted portions 13, 13 via which the shroud 1 is or can be mounted to lateral or left and right shroud mounting portions 21a, 21a formed on flange-like front ends of left and right front side frames 21, 21 of the body, respectively. The left body mounted portion 13 is so formed as to connect the left wall 11c of the radiator holding portion 11 with the left lamp holding portion 12, and the right body mounted portion 13 is so formed as to connect the right wall 11c of the radiator holding portion 11 with the right lamp holding portion 12.

The left and right body mounted portion 13, 13 are correspondingly sandwiched or arranged between left and right flanges 5b, 5b, which are formed on the rear ends of impact absorbing pipes 5a, 5a each disposed on both the left and right ends of the bumper reinforcement 5, and the shroud mounting portions 21a, 21a of the left and right front side frames, then the mounted portion 13, 13 are fixedly secured together with the left and right flanges 5b, 5b of the bumper reinforcement 5 with bolts and nuts (not shown) to the shroud mounting portion 21a, 21a of the left and right front side frames 21, 21.

The bumper face 6 is fixedly secured to left and right end portions of the upper wall 11a of the radiator holding portion 11 of the shroud 1, and left and right front fenders (not shown).

Projections 14, 14 forwardly projecting are formed on the left wall 11c of the radiator holding portion11 in the vicinity of the left body mounted portion 13 (on the central side in lateral of the left body mounted portion 13), and the right wall 11c of the radiator holding portion11 in the vicinity of the right body mounted portion 13 (on the central side in lateral of the right body mounted portion 13).

Ahead of both the projections 14, 14, the bumper reinforcement 5 is located. The bumper reinforcement 5 is so configured to bump against both the projections 14, 14 when it is moved rearwardly with crushing its left and right impact absorbing pipes 5a, 5a as a result e.g. of an automotive frontal collision or a frontal impact. When rearward load larger than a predetermined amount acts on the projection 14 as a result of rearward movement of the bumper reinforcement 5, the portion between the projection 14 and the body mounted portion 13 will tear or break, so that the radiator holding portion 11 and left and right body mounted portions 13, 13 are separated, because a portion 16 located between the projection 14 and the body mounted portion 13 in the vicinity of the projection 14 (indicated as XXX in FIG. 2) is so designed as to easily tear.

The radiator holding portion 11 is formed with two upper braces 11e, 11e diagonally connecting each projection 14 with a bonnet latch holding portion 11d projectingly disposed on the laterally central portion on the front surface of the upper wall 11a, and two lower braces 11f, 11f diagonally connecting each projection 14 with the lower wall 11b.

Therefore, according to embodiment 1, in automotive frontal collision, the bumper reinforcement 5 is moved rearwardly with crushing its left and right impact absorbing pipes 5a, 5a until the bumper reinforcement 5 bumps against the left and right projections 14, 14 as preferred rearward moving means each formed on the left and right walls 11c, 11c of the radiator holding portion 11 of the shroud 1. In the case that load acting on each projections 14, 14 exceeds a predetermined amount, the portion between the left projection 14 and the left body mounted portion 13, and the portion between the right projection 14 and the right body mounted portion 13 will tear or break, so that the radiator holding portion 11 and the left and right body mounted portion 13, 13 are separated. It should be noted that such separation of the radiator holding portion 11 from the left and right body mounted portion 13, 13 will not cause the radiator holding portion 11 to fall down, because the bumper face 6 is fixedly secured to the left and right end portions of the upper wall 11a of the radiator holding portion 11 of the shroud 1 and to the left and right portions of front fenders so that the radiator holding portion 11 is supported by the bumper face 6.

The separation causes the radiator holding portion 11 to move rearwardly in spite that the left and right body mounted portions 13, 13 are fixed respectively to the shroud mounting portions 21a, 21a of the left and right front side frames 21, 21 so as to hardly move rearwardly. As a result, so high an impact would act on the radiator holding portion 11 that possibly damages the radiator 2 and the condenser 3 held by the radiator holding portion 11 if the radiator holding portion 11 and the left and right body mounted portions 13, 13 were not separated, in this first preferred embodiment, however, the separation precludes acting of such a high impact on the part. Accordingly, the radiator 2 and the condenser 3 will not or are likely not to be damaged, whereby improving repairability.

Additionally, the resin-made shroud 1 is assured to keep rigidity of the radiator holding portion 11 and the left and right lamp holding portions 12, 12, because the left body mounted portion 13 is so formed as to connect the left wall 11 c of the radiator holding portion 11 with the left lamp holding portion 12, and the right body mounted portion 13 is so formed as to connect the right wall 11c of the radiator holding portion 11 with the right lamp holding portion 12

Furthermore, the upper braces 11e, 11e and the lower braces 11f, 11f provided on the radiator holding portion 11 of the shroud 1 further improve the rigidity of the radiator holding portion 11. Additionally, one end of each upper brace 11e and one end of each lower brace 11f are connected to the corresponding projections 14 so that each projection 14 serves as reinforcing ribs for each upper brace 11e and each lower brace 11f to assure the rigidity of each of the upper brace 11e and each lower brace 11f.

It should be appreciated that though the radiator holding portion 11 and the left and right body mounted portions 13, 13 are separated at the portion between the projection 14 and the body mounted portion 13 in the vicinity of the projection 14 in automotive frontal collision, the separation may be performed in any suitable manner where the radiator holding portion 11 and the left and right body mounted portions 13, 13 are separated in automotive frontal collision, in particular allowing a rearward movement of the radiator holding portion 11.

In addition, the forward member, which is positioned in front of the left and right projections 14, 14 and bumps against the left and right projections 14, 14 in automotive frontal collision, is not limited to the bumper reinforcement 5, but may be of any configuration for exerting load onto both the projection 14, 14.

Furthermore, the radiator holding portion 11 may be separated from the left and right body mounted portions 13, 13 together with the left and right lamp holding portions 12, 12. If the shroud comprises holding portions for holding other vehicle parts, the holding portions may be separated from the left and right body mounted portions 13, 13.

### (Second Embodiment)

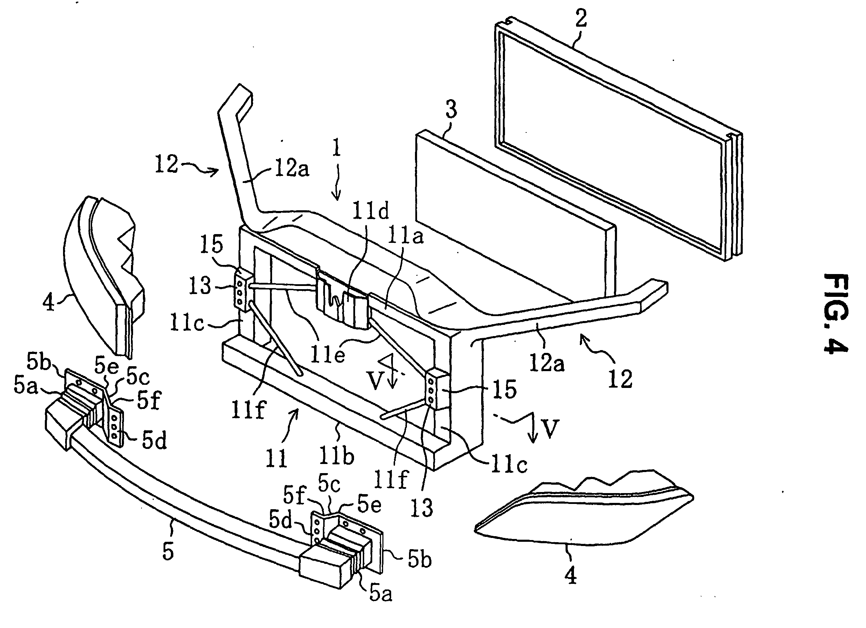

FIG. 4 to FIG. 6 shows a second preferred embodiment of the present invention (the same numerical references are given to the identical or similar parts with those in FIG. 1 to FIG. 3, and detailed description on them is omitted) in which the shroud 1 includes a deflectable means which allows the holding portions to move rearwardly relative to the front section of the body during automotive frontal collision.

That is, in this second embodiment, shroud mounting portions 21a, 21a as shown in the first embodiment are not provided on the front ends of the left and right front side frames 21, 21 but the left and right flanges 5b, 5b of the bumper reinforcement 5 are directly secured to the front ends of the left and right front side frames 21a, 21a respectively, and the left and right lamp holding portions 12, 12 do not comprise lower walls 12b nor side walls 12c but comprises only the upper walls 12a.

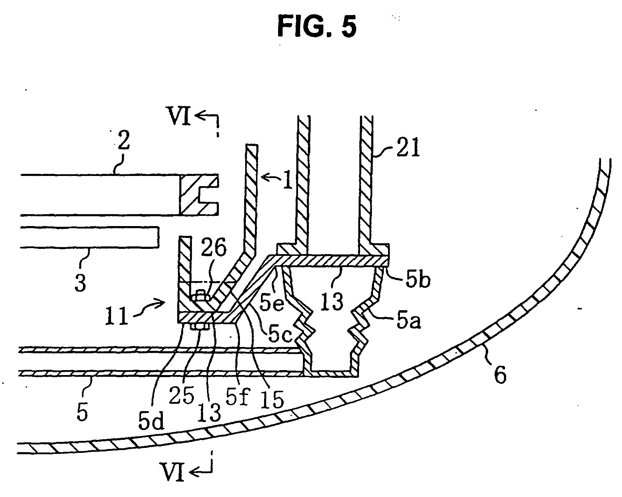

Then, each flange 5b of the bumper reinforcement 5 is formed with extensions 5c extending centrally in lateral and having a shroud mounting portion 5d on its distal end. These extensions 5c include a first bent or bending portion 5e formed on the proximal side of the extension 5c and a second bent or bending portion 5f formed on the distal side of it. Middle portions between the first bent portions 5e and the second bent portions 5f run forwardly and centrally in lateral direction, while the distal sides of the second bent portions 5f (distal portions provided with the shroud mounting portions 5d) run laterally. Accordingly, the extension(s) 5c substantially has/have a S-shaped section (when viewed from above, FIG. 5). In a meantime, front faces of the left and right walls 11c, 11c of the radiator holding portion 11 of the shroud 1 (shown as a dashed line in FIG. 5) are provided with left and right projecting portions 15, 15 as with projections 14, 14 shown in the first embodiment, respectively. These both projecting portions 15, 15 are each provided with the left and right body mounted portions 13, 13 on their end surfaces. The portions 13, 13 are mounted to the shroud mounting portions 5d, 5d of both the extensions 5c, 5c via bolt 25 and nut 26.

The bumper reinforcement 5 is located ahead of the shroud mounting portions 5d, 5d of both the extensions 5c, 5c as with the embodiment 1 so that the bumper reinforcement 5 is moved rearwardly with crushing its left and right impact absorbing pipe 5a, 5a until the bumper reinforcement 5 bumps against the shroud mounting portions 5d, 5d located on the projecting portions 15, 15 in automotive frontal collision. In addition, when load larger than a predetermined amount acts rearwardly on the projecting portions 15, 15 through the shroud mounting portion 5d of both the extensions 5c, because of rearward movement of the bumper reinforcement 5, the extension 5c deflects rearwardly around a first bend or bending portion 5e, so that the shroud 1 will move rearwardly.

It should be noted that the radiator holding portion 11 is formed with two upper braces 11e, 11e diagonally connecting each projecting portion 15 with the bonnet latch holding portion 11d disposed on the upper wall 11a, and two lower braces 11f, 11f diagonally connecting each projecting portion 15 with the lower wall 11b as in the first embodiment.

Accordingly, in the second embodiment, in case of an automotive frontal collision or frontal impact, the bumper reinforcement 5 is moved rearwardly with crushing its left and right impact absorbing pipes 5a, 5a until the bumper reinforcement 5 bumps against or abuts on the shroud mounting portions 5d, 5d of one or both the extensions 5c, 5c formed on the left and right flanges 5b, 5b. In the case that load acting on the projecting portions 15, 15 through the shroud mounting portion 5d exceeds a predetermined amount, the extension 5c deflects rearwardly around a first bend or bending portion 5e, so that the shroud 1 will move rearwardly. Consequently, the shroud 1 is more likely to be prevented from receiving high impact and damage, and the radiator 2 and condenser 3 held in the radiator holding portion 11 and the left and right head lamps 4, 4 each held in the left and right lamp holding portions 12, 12 are more likely to be prevented from being damaged. Therefore, repairability is improved over that of the embodiment 1 with a simple structure.

In addition, the extensions 5c and the first bent or bending portion 5e of each flange 5b of the bumper reinforcement 5 constitute the shroud mounting portions 5d and the deflectable means as preferred rearward moving means for allowing the shroud 1 to move rearwardly relative to the front section of the body during the automotive frontal collision, preferably so that the shroud 1 is assured to be rigidly supported by the left and right front side flames 21, 21 in normal state, while the shroud 1, the radiator 2, the condenser 3, and the left and right head lamps 4, 4 are more likely to be prevented from being damaged because the shroud 1 is assured to move rearwardly during the automotive frontal collision.

Moreover, as in the first embodiment, the upper braces 11e, 11e and the lower braces 11f, 11f provided on the radiator holding portion 11 of the shroud 1 further improve the rigidity of the radiator holding portion 11. Additionally, one end of each upper brace 11e and one end of each lower brace 11f are connected to the corresponding projecting portions 15 so that each projecting portion 15 serves as reinforcing ribs for each upper brace 11e and each lower brace 11f to assure the rigidity of each upper brace 11e and each lower brace 11f.

It should be appreciated that the deflectable means may be of any suitable configuration for allowing the shroud 1 to move rearwardly relative to the front section of the body during a possible automotive frontal collision, though, in the second embodiment, the left and right extensions 5c, 5c and the first bent or bending portions 5e, 5e formed on the left and right flanges 5b of the bumper reinforcement 5 constitute the deflectable means as preferred rearward moving means for allowing the shroud 1 to move rearwardly relative to the front section of the body during the automotive frontal collision.

In addition, the forward member, which is located ahead of the shroud mounting portions 5d, 5d of both the extensions 5c, 5c and bumps against the shroud mounting portion 5d, 5d during the automotive frontal collision, are of any suitable configuration for exerting load onto the shroud mounting portion 5d, 5d.

Furthermore, the shroud 1 may comprise holding portions for holding other vehicle parts in addition to the radiator holding portion 11 and preferably the left and right lamp holding portions 12, 12.

Additionally, though, in both the first embodiment and the second embodiment, the upper braces 11e, 11e and the lower braces 11f, 11f are provided on the radiator holding portion 11 of the shroud 1, they are not essential, that is, only upper braces 11e, 11e or only lower braces 11f, 11f may be provided.

## Claims

1. An automotive front body structure, comprising a shroud (1) including a holding portion (11) for holding one or more vehicle parts (2; 3; 4), and body mounted portions (13, 13) via which the shroud (1) is mountable to a front section of the body, wherein
said automotive front body structure includes
a rearward moving means (14, 16; 15, 5c, 5e, 5f) for causing said holding portion (11) to move rearwardly relative to the front section of the body in case of a frontal collision of the automobile, **characterized in that**
said automotive front body structure further includes impact absorbing members (5a) located before shroud (1) and the vehicle parts (2, 3), whereby said impact absorbing members (5a) are crushed on impact and
said holding portion (11), when moving rearwardly, is supported by a bumper face (6).

2. An automotive front body structure as defined in claim 1, wherein said rearward moving means (14, 16; 15, 5e) includes a separating portion (16), which is formed between said holding portion (11) and said body mounted portions (13, 13), and at which said holding portion (11) and said body mounted portions (13, 13) are separated in frontal collision of the automobile.

3. An automotive front body structure as defined in one of the preceding claims, wherein said rearward moving means (14, 16; 15, 5e) includes a projection (14) forwardly projecting and formed on the holding portion (11) in the vicinity of the body mounted portions (13, 13), and
the automotive front body structure includes a forward member (5) located ahead of said projection (14),
wherein,
said holding portion (11) and said body mounted portions (13, 13) are preferably separated when load larger than a specified amount acts rearwardly on said projection (14) by rearward movement of said forward member (5) as a result of frontal collision of the automobile.

4. An automotive front body structure as defined in claim 3, wherein said forward member (5) is a bumper reinforcement extending substantially laterally.

5. An automotive front body structure as defined in claim 1, wherein said rearward moving means (14, 16; 15, 5c) includes a deflectable means (5c), which connects said body mounted portions (13, 13) with the front section of the body and is deflected so as to allow said holding portion (11) to move rearwardly relative to the front section of the body in case of a frontal collision of the automobile.

6. An automotive front body structure as defined in claim 5, wherein the front section of the body includes front side frames (21,21),
the automotive front body structure includes a bumper reinforcement (5) having a flange (5b) via which said bumper reinforcement (5) is mounted to the front side frames (21, 21) of the body,
said deflectable means (5c) comprises an extension (5c) of the flange (5b) extending laterally from the flange (5b) to said body mounted portions (13, 13), and
said rearward moving means (14, 16; 15, 5c) includes a projection (15) projecting forwardly and formed on a front surface of the shroud (1),
wherein,
said extension (5c) preferably deflects so that said holding portion (11) moves rearwardly relative to the front side frames (21, 21) of the body when load larger than a specified amount acts rearwardly on said projection (15) by rearward movement of said bumper reinforcement (5) as a result of the automotive frontal collision.

7. An automotive front body structure as defined in one of the preceding claims, wherein said holding portion (11) of the shroud (1) comprises a substantially rectangular radiator holding portion (1) comprising an upper wall (11a) and/or a lower wall (11b) substantially facing each other in vertical direction and substantially extending laterally and preferably left and right side walls (11c, 11c) each connecting left outer ends or end portions and right outer ends of said upper wall (11a) and said lower wall (11b).,

8. An automotive front body structure as defined in claims 6 and 7, wherein said projections (15) are formed on said left wall (11c) and right wall (11c) of the radiator holding portion (11).

9. An automotive front body structure as defined in one of the preceding claims, further comprising:
one or more braces (11e, 11f) provided on said holding portion (11), preferably said radiator holding portion (11) which connect said projections (14; 15) and at least one of the upper wall (11a) and the lower wall (11b).

10. An automotive front body structure as defined in one of the preceding claims, wherein the shroud (1) is made of resin.

## Patentansprüche

1. Vordere Fahrzeug-End- bzw. -Körperstruktur, umfassend eine Umhüllung bzw. Abdeckung bzw. ein Abdeck- bzw. Abschirmblech (1), welches einen haltenden bzw. Halteabschnitt (11) für ein Halten von einem oder mehreren Fahrzeugteil(en) (2; 3; 4) beinhaltet, und einen Körper, welcher an Abschnitten (13, 13) montiert bzw. angeordnet ist, über welche das Abschirmblech (1) an einem vorderen Abschnitt bzw. Querschnitt des Körpers bzw. der Karosserie montierbar ist, wobei
die vordere Fahrzeug-Körperstruktur beinhaltet
sich rückwärts bewegende Mittel (14, 16; 15, 5c, 5e, 5f), um zu bewirken, daß sich der haltende Abschnitt (11) nach rückwärts relativ zu dem vorderen Abschnitt des Körpers in einem Fall eines Frontalzusammenstoßes des Fahrzeug bewegt, **dadurch gekennzeichnet, daß**
die vordere Fahrzeug-Körperstruktur weiters einen Schlag bzw. Aufprall absorbierende Glieder (5a) beinhaltet, welche vor dem Abschirmblech (1) und den Fahrzeugteilen (2, 3) angeordnet sind, wodurch die einen Aufprall absorbierenden Glieder (5a) bei einem Aufprall bzw. Zusammenstoß gebrochen bzw. eingedrückt bzw. verformt werden, und
der haltende Abschnitt (11), wenn er sich nach rückwärts bewegt, durch eine Stoßstangenfläche bzw. -seite (6) abgestützt bzw. getragen ist.

2. Vordere Fahrzeug-Körperstruktur nach Anspruch 1, wobei die sich nach rückwärts bewegenden Mittel (14, 16; 15, 5e) einen trennenden bzw. Trennabschnitt (16) beinhalten, welcher zwischen dem haltenden Abschnitt (11) und den am Körper montierten Abschnitten (13, 13) ausgebildet ist, und bei welchen der haltende Abschnitt (11) und die am Körper montierten Abschnitte (13, 13) bei einem Frontalzusammenstoß des Fahrzeugs getrennt sind bzw. werden.

3. Vordere Fahrzeug-Körperstruktur nach einem vorangehenden Anspruch, wobei die sich nach rückwärts bewegenden Mittel (14, 16; 15, 5e) einen Vorsprung bzw. Fortsatz (14) beinhalten, welcher nach vorne vorragt und an dem haltenden Abschnitt (11) in der Nähe der am Körper montierten Abschnitte (13, 13) ausgebildet ist, und
die vordere Fahrzeug-Körperstruktur, ein vorderes bzw. nach vorne gerichtetes Glied (5) beinhaltet, welches vor dem Vorsprung (14) angeordnet ist,
wobei
der haltende Abschnitt (11) und die am Körper montierten Abschnitte (13, 13) vorzugsweise getrennt sind bzw. werden, wenn eine Last bzw. Belastung größer als eine bestimmte Größe nach rückwärts auf den Vorsprung (14) durch eine Rückwärtsbewegung des nach vorne gerichteten Glieds (5) als ein Resultat eines Frontalzusammenstoßes des Fahrzeugs wirkt.

4. Vordere Fahrzeug-Körperstruktur nach Anspruch 3, wobei das nach vorne gerichtete Glied (5) eine Stoßstangenverstärkung ist, welche sich im wesentlichen seitlich erstreckt.

5. Vordere Fahrzeug-Körperstruktur nach Anspruch 1, wobei die sich nach rückwärts bewegenden Mittel (14, 16; 15, 5c) ablenkbare Mittel (5c) beinhalten, welche die am Körper montierten Abschnitte (13, 13) mit dem vorderen Abschnitt bzw. Querschnitt des Körpers verbinden und so abgelenkt sind, um dem haltenden Abschnitt (11) zu erlauben, daß er sich nach rückwärts relativ zu dem vorderen Abschnitt des Körpers in dem Fall eines Frontalzusammenstoßes des Fahrzeugs bewegt.

6. Vordere Fahrzeug-Körperstruktur nach Anspruch 5, worin der vordere Querschnitt des Körpers vordere Seitenrahmen (21, 21) beinhaltet,
die vordere Fahrzeug-Körperstruktur eine Stoßstangenverstärkung (5) beinhaltet, welche einen Flansch (5b) aufweist, über welchen die Stoßstangenverstärkung (5) an den vorderen Seitenrahmen (21, 21) des Körpers montiert ist, die ablenkbaren Mittel (5c) eine Erstreckung bzw. Verlängerung (5c) des Flansches (5b) umfassen, welche sich seitlich von dem Flansch (5b) zu den am Körper montierten Abschnitten (13, 13) erstreckt, und
die sich nach rückwärts bewegenden Mittel (14, 16; 15, 5c) einen Vorsprung bzw. Fortsatz (15) beinhalten, welcher nach vorne vorragt und an einer vorderen Fläche bzw. Oberfläche des Abschirmblechs (1) ausgebildet ist,
wobei
sich die Erstreckung (5c) vorzugsweise so ablenkt, daß der haltende Abschnitt (11) sich nach rückwärts relativ zu den vorderen Seitenrahmen (21, 21) des Körpers bewegt, wenn eine Last bzw. Belastung größer als eine bestimmte Größe nach rückwärts auf den Vorsprung (15) durch eine Rückwärtsbewegung der Stoßstangenverstärkung (5) als ein Resultat des Frontalzusammenstoßes des Fahrzeugs wirkt.

7. Vordere Fahrzeug-Körperstruktur nach einem der vorangehenden Ansprüche, worin der haltende Abschnitt (11) des Abschirmblechs (1) eine im wesentlichen rechteckigen bzw. rechtwinkeligen Kühler-Halteabschnitt (1) umfaßt, welcher eine obere Wand (11a) und/oder eine untere Wand (11b), welche im wesentlichen zueinander in einer vertikalen Richtung gerichtet sind und sich im wesentlichen seitlich erstrecken, und vorzugsweise linke und rechte Seitenwände (11c, 11c) umfaßt, welche jeweils linke äußere Enden oder Endabschnitte und rechte äußere Enden der oberen Wand (11a) und der unteren Wand (11b) verbinden.

8. Vordere Fahrzeug-Körperstruktur nach Anspruch 6 und 7, worin die Vorsprünge (15) an der linken Wand (11c) und rechten Wand (11c) des Kühler-Halteabschnitts (11) ausgebildet sind.

9. Vordere Fahrzeug-Körperstruktur nach einem der vorangehenden Ansprüche, weiters umfassend:
eine oder mehrere Strebe(n) (11e, 11f), welche an dem haltenden Abschnitt (11), vorzugsweise dem Kühler-Halteabschnitt (11) vorgesehen ist bzw. sind, welche die Vorsprünge (14; 15) und wenigstens eine der oberen Wand (11a) und der unteren Wand (11b) verbinden.

10. Vordere Fahrzeug-Körperstruktur nach einem der vorangehenden Ansprüche, worin das Abschirmblech (1) aus einem Harz hergestellt ist.

## Revendications

1. Structure de châssis avant d'automobile, qui comprend une enveloppe (1) qui contient une partie de soutien (11) qui soutient une ou plusieurs pièces (2; 3; 4) du véhicule et des parties (13, 13) montées sur le châssis, par l'intermédiaire desquelles l'enveloppe (1) peut être montée sur une partie avant du châssis, dans laquelle ladite structure avant de châssis de véhicule comprend:
un moyen (14, 16; 15, 5c, 5e, 5f) de déplacement vers l'arrière qui amène ladite partie de soutien (11) à se déplacer vers l'arrière par rapport à la partie avant du châssis en cas de collision frontale de l'automobile,
**caractérisée en ce que**
ladite structure de châssis avant d'automobile comprend en outre des éléments (5a) d'absorption d'impact situés en avant de l'enveloppe (1) et des pièces (2, 3) du véhicule, lesdits éléments (5a) d'absorption d'impact étant écrasés lors d'un impact, et
ladite partie de retenue (11) est soutenue par une surface (6) de pare-chocs lorsqu'elle est déplacée vers l'arrière.

2. Structure de châssis avant d'automobile selon la revendication 1, dans laquelle lesdits moyens (14, 16; 15, 5e) de déplacement vers l'arrière comprennent une partie de séparation (16) qui est formée entre ladite partie de soutien (11) et lesdites parties (13, 13) montées sur le châssis, et sur lesquels ladite partie de soutien (11) et lesdites parties (13, 13) montées sur le châssis sont séparées en cas de collision frontale de l'automobile.

3. Structure de châssis avant d'automobile selon l'une des revendications précédentes, dans laquelle lesdits moyens (14, 16; 15, 5e) de déplacement vers l'arrière comprennent une saillie (14) qui déborde vers l'avant et qui est formée la partie de soutien (11) au voisinage des parties (13, 13) montées sur le châssis,
la structure de châssis avant d'automobile comprenant un élément avant (5) situé en avant de ladite saillie (14),
dans laquelle
ladite partie de soutien (11) et lesdites parties (13, 13) montées sur le châssis sont séparées de préférence lorsqu'une charge plus grande qu'une valeur spécifiée agit vers l'arrière sur ladite saillie (14) lors d'un déplacement vers l'arrière dudit élément avant (5) suite à une collision frontale de l'automobile.

4. Structure de châssis avant d'automobile selon la revendication 3, dans laquelle ledit élément avant (5) est un renfort de pare-chocs qui s'étend essentiellement sur le côté.

5. Structure de châssis avant d'automobile selon la revendication 1, dans laquelle lesdits moyens (14, 16; 15, 5c) de déplacement vers l'arrière comprennent un moyen (5c) apte à être défléchi, qui relie lesdites parties (13, 13) montées sur le châssis à la partie avant du châssis et qui sont défléchis de manière à permettre ladite partie de soutien (11) à se déplacer vers l'arrière par rapport à la partie avant du châssis en cas de collision frontale de l'automobile.

6. Structure de châssis avant d'automobile selon la revendication 5, dans laquelle la partie avant du châssis comprend des bâtis latéraux avant (21, 21),
la structure de châssis avant d'automobile comprenant un renfort de pare-chocs (5) doté d'une bride (5b) par l'intermédiaire de laquelle ledit renfort de pare-chocs (5) est monté sur les bâtis latéraux avant (21, 21) du châssis,
ledit moyen de déflexion (5c) comprenant un prolongement (5c) de la bride (5b) qui s'étend latéralement par rapport à la bride (5b) en direction desdites parties (13, 13) montées sur le châssis,
lesdits moyens (14, 16; 15, 5c) de déplacement vers l'arrière comprenant une saillie (15) qui déborde vers l'avant et qui est formée sur une surface avant de l'enveloppe (1),
dans laquelle
ladite saillie (5c) se défléchit de préférence de telle sorte que ladite partie de soutien (11) se déplace vers l'arrière par rapport aux bâtis latéraux avant (21, 21) du châssis lorsqu'une charge supérieure à une valeur spécifiée agit vers l'arrière sur ladite saillie (15) lors d'un déplacement vers l'arrière dudit renfort de pare-chocs (5) suite à une collision frontale de l'automobile.

7. Structure de châssis avant d'automobile selon l'une des revendications précédentes, dans laquelle ladite partie de soutien (11) de l'enveloppe (1) comprend une partie (1) essentiellement rectangulaire de soutien du radiateur, qui comprend une paroi supérieure (11a) et/ou une paroi inférieure (11b) situées essentiellement face l'une à l'autre dans la direction verticale et des parois latérales (11c, 11c) qui s'étendent essentiellement latéralement et de préférence à gauche et à droite, et qui relient toutes deux les extrémités ou parties d'extrémités extérieures gauches et parties extérieures droites de ladite paroi supérieure (11a) et de ladite paroi inférieure (11b).

8. Structure de châssis avant d'automobile selon les revendications 6 et 7, dans laquelle lesdites saillies (15) sont formées sur ladite paroi gauche (11c) et ladite paroi droite (11c) de la partie (11) de retenue du radiateur.

9. Structure de châssis avant d'automobile selon l'une des revendications précédentes, qui comprend en outre:
une ou plusieurs entretoises (11e, 11f) prévues sur ladite partie de soutien (11), de préférence ladite partie (11) de soutien du radiateur qui relie lesdites saillies (14; 15) et au moins l'une parmi la paroi supérieure (11a) et la paroi inférieure (11b).

10. Structure de châssis avant d'automobile selon l'une des revendications précédentes, dans laquelle l'enveloppe est réalisée en résine.
